# FASCICULE DE BREVET EUROPEEN

(11) **EP 1 524 251 B1**
(45) Date de publication et mention de la délivrance du brevet: **06.04.2016**
(21) Numéro de dépôt: 04292366.4
(22) Date de dépôt: 05.10.2004
(51) Int. Cl.: C04B 35/42, C04B 35/105, H01T 13/38

(54) **Procédé de préparation d'une céramique semi-conductrice, céramique semi-conductrice et bougie d'allumage utilisant cette céramique**
Verfahren zur Herstellung einer halbleitenden Keramik, halbleitende Keramik und Zündkerze mit einer halbleitenden Keramik
Process for manufacturing a semiconductor ceramic material, semiconductor ceramic material and spark plug using the same

(30) Priorité: 15.10.2003 FR 0312043
(43) Date de publication de la demande: 20.04.2005
(73) Titulaire: Meggitt (France), 75011 Paris (FR)
(72) Inventeur: Collardey, François, 25150 Vermondans (FR); Jankowiak, Aurélien, 67540 Ostwald (FR); Blanchart, Philippe, 87100 Limoges (FR); Laigneau, Dominique, 16290 Hiersac (FR)
(74) Mandataire: Neyret, Daniel Jean Marie

(56) Documents cités:
- US-A- 4 260 872
- US-B2- 6 632 381

## Description

L'invention concerne le domaine des bougies d'allumage, et plus particulièrement celui des céramiques semi-conductrices utilisées dans la fabrication de bougies du type haute énergie basse tension.

On rappelle que les bougies d'allumage, notamment pour turbines et moteurs à réaction, peuvent relever de deux types :
- les bougies du type haute énergie haute tension (HEHT), dont la tension de fonctionnement est de l'ordre de 20 kV ;
- les bougies du type haute énergie basse tension (HEBT) dont la tension de fonctionnement est de l'ordre de 2 à 3 kV ; Elles sont capables de fournir une énergie de quelques 1/10 de Joule à quelques Joules.

Les bougies HEBT comportent un matériau semi-conducteur, tel qu'un cermet, entre leurs électrodes, de manière à ce que l'application d'une tension suffisante entre ces électrodes conduise à la création d'une étincelle.

Le comportement du matériau pendant les différentes phases de l'étincelle a été analysé comme étant le suivant.

D'abord, la céramique semi-conductrice est active pendant la phase d'ionisation qui correspond à une accumulation de charges à la surface du matériau. Ensuite vient la phase d'amorçage qui, elle, correspond à une phase intermédiaire pendant laquelle il y a propagation de proche en proche de micro-arcs à ladite surface. Enfin, vient la phase d'étincelle pendant laquelle la céramique semi-conductrice est inactive mais subit d'importantes contraintes mécaniques et thermiques engendrées par le passage de l'étincelle.

Les avantages des bougies HEBT sont d'une part liés à leur fonctionnement peu dépendant des conditions régnant dans la chambre de combustion (ré-allumage à forte pression) et d'autre part à la chaîne d'allumage de plus faible encombrement qu'il suffit de mettre en place pour assurer leur fonctionnement. Ce sont ces avantages qui ont conduit au développement de semi-conducteurs à base de carbure de silicium décrits en particulier dans les documents US-A-5 028 346 et FR-A-2 346 881. Ces semi-conducteurs renferment également une phase isolante à base, par exemple, de nitrure de silicium et d'oxynitrure de silicium modifié, ou de silice, d'alumine et d'oxyde d'alcalino-terreux.

Le document US 4 260 872 décrit un procédé de préparation d'une céramique semi-conductrice ayant la composition La₁₋ₓSrₐMg_{b}Nb_{c}CrO₃. Ce document ne prévoit pas de mélanger la phase conductrice avec une phase isolante à base d'alumine ou de mullite.

Le document US 6 632 381 décrit des bougies pour moteur à combustion interne, dont l'isolateur est à base d'alumine dopée su Si, Co, Mg, Ba, Zn et/ou B et Na.

Cependant, si ces systèmes ne se sont pas généralisés sur les moteurs, c'est que la durée de vie d'une bougie de type semi-conducteur devient très réduite dans le cas d'une utilisation dans des conditions sévères, c'est à dire à fortes pressions et hautes températures combinées avec des attaques chimiques liées au type de carburant utilisé.

La durée de vie des bougies est limitée, dans le cas des bougies HEHT, par l'usure des électrodes. Dans les bougies HEBT existantes, l'usure du semi-conducteur et l'oxydation du carbure de silicium interviennent sensiblement avant l'usure des électrodes, et ce sont elles qui limitent la durée de vie de la bougie.

Le but de l'invention est d'augmenter la durée de vie et la fiabilité des bougies à semi-conducteur du type HEBT.

A cet effet, l'invention a pour objet un procédé de préparation d'une céramique semi-conductrice, caractérisé en ce que :
- on mélange, dans un récipient renfermant un liquide, 30 à 90% en poids d'une phase conductrice à base de Z₁₋ₓMₓCrO₃ pour 0≤ X ≤0,3, avec Z pouvant être un élément du groupe des lanthanides ou un mélange de tels éléments, et M pouvant être du calcium, du strontium, du magnésium, de l'aluminium, du titane, de l'yttrium ou un mélange de deux ou plus de ces éléments ; 8 à 60% en poids d'une phase isolante à base d'alumine à grains fins ou d'alumine tabulaire ou de mullite ou d'un mélange de deux ou plus de ces composés ; et 0 à 10% en poids d'additifs de frittage ;
- on effectue des opérations de broyage, de séchage et de tamisage de ce mélange ;
- on effectue un pressage de ce mélange ;
- et on effectue un frittage de ce mélange de manière à obtenir une céramique de porosité inférieure ou égale à 25%.

Z est, de préférence, du lanthane.

La porosité de la céramique obtenue est de préférence comprise entre 0 et 15%.

On ajoute de préférence au mélange un ou plusieurs composés plastifiants et on effectue après le pressage et avant le frittage une opération de déliantage.

On effectue alors de préférence le broyage en deux étapes, l'addition du plastifiant ayant lieu entre les deux étapes, et la deuxième étape de broyage étant moins énergique que la première étape.

Les additifs de frittage sont de préférence choisis parmi des silicates (talc, bentonite par exemple), des oxydes d'alcalins et d'alcalino-terreux Na₂O, K₂O, BaO, CaO, MgO, des carbonates d'alcalino-terreux BaCO₃, CaCO₃, MgCO₃, la dolomie, des composés thermo-émissifs tels que le titanate de baryum BaTiO₃, des composés de terres rares tels que l'oxyde de lanthane, l'oxyde d'yttrium et des composés contenant des métaux de transition, ou un mélange de ces composés.

L'invention a également pour objet une céramique semi-conductrice, caractérisée en ce qu'elle comporte 30 à 90% en poids d'une phase conductrice à base de Z₁₋ₓMₓCrO₃ pour 0≤ X ≤0,3, Z pouvant être un élément du groupe des lanthanides ou un mélange de tels éléments, et avec M pouvant être du calcium, du strontium, du magnésium, de l'aluminium, du titane, de l'yttrium ou d'un mélange de deux ou plus de ces composés ; 8 à 60% en poids d'une phase isolante à base d'alumine ou de mullite ou d'un mélange de ces composés, ou de leurs produits de réaction à haute température ; et 0 à 10% en poids d'additifs de frittage, ou de leurs produits de réaction à haute température, et en ce que sa porosité est inférieure ou égale à 25%.

Z est, de préférence, du lanthane.

La porosité de la céramique est de préférence comprise entre 0 et 15%.

Les additifs de frittage sont de préférence choisis parmi des silicates, des oxydes d'alcalins et d'alcalino-terreux Na₂O, K₂O, BaO, CaO, MgO, des carbonates d'alcalino-terreux BaCO₃, CaCO₃, MgCO₃, la dolomie, des composés thermo-émissifs tels que le titanate de baryum, des composés de terres rares tels que l'oxyde de lanthane, et des composés contenant des métaux de transition tels que l'oxyde d'yttrium, ou un mélange de ces composés.

L'invention a également pour objet une bougie d'allumage du type à haute énergie basse tension comportant une céramique semi-conductrice entre ses électrodes, caractérisée en ce que ladite céramique est du type précédent.

Comme on l'aura compris, l'invention consiste d'abord à utiliser, comme phase conductrice un composé de type Z₁₋ₓMₓCrO₃ avec 0≤ x ≤0,3. Z est un élément du groupe des lanthanides ou un mélange de tels éléments. Le lanthane en est un exemple privilégié. M (dont la présence est facultative) peut être du calcium, du strontium, du magnésium, de l'aluminium, du titane, de l'yttrium.

Ces composés présentent des caractéristiques mécaniques et électriques particulièrement élevées. Ils présentent, notamment, une diminution de la résistivité volumique avec la température. Surtout, ces propriétés sont stables dans des conditions de fonctionnement très sévères : température de -50 à 900°C, pression de 1 à 50 bars, présence de kérosène.

Typiquement, la céramique renferme, après frittage, des composés du type AlₓSi_{y}O_{z}, avec y pouvant être égal à 0, aluminate de lanthanide et éventuellement silicate de lanthanide, Z₁₋ₓMₓCrO₃ avec M pouvant être Ca, Sr, Mg, Al, Ti, Y ou un mélange de plusieurs de ces éléments, et une phase amorphe à base d'oxygène et d'un ou plusieurs éléments parmi Al, Si, Ca.

Ainsi, l'élément semi-conducteur peut résister aux importantes sollicitations qu'il subit, pendant la phase d'ionisation (forte pression, haute température, présence d'agents chimiques) et pendant la phase d'étincelle où le semi-conducteur est passif, mais subit des chocs thermiques et mécaniques. Ces chocs conduisent à un déchaussement des particules de SiC situées au voisinage de la surface inter-électrodes dans le cas des bougies HEBT connues dans l'art antérieur.

De plus, ladite céramique semi-conductrice résiste aux longues expositions à haute température et forte pression en conservant ses caractéristiques mécaniques et électriques, alors que les semi-conducteurs à base de carbure de silicium décrits dans l'art antérieur perdent partiellement ou en totalité leurs caractéristiques électriques après des expositions prolongées à de hautes températures et de fortes pressions, par oxydation du carbure de silicium.

Concernant la phase isolante, elle est obtenue lors du frittage à partir d'alumine à grains fins, ou d'alumine tabulaire, ou de mullite 3Al₂O₃, 2SiO₂, ou d'un mélange de deux ou plus de ces composés.

Des additifs de frittage permettent d'abaisser la température de frittage et d'assurer une densification optimale, procurant à la céramique une grande dureté et de bonnes propriétés mécaniques. La porosité de la céramique ne dépasse pas 25%, et est optimalement comprise entre 0 et 15%.

Comme additifs de frittage, on peut utiliser en particulier (mais pas exclusivement), seuls ou en combinaison, des silicates (talc, bentonite par exemple), des oxydes d'alcalins et d'alcalino-terreux (Na₂O, K₂O, BaO, CaO, MgO), des carbonates d'alcalino-terreux (BaCO₃, CaCO₃, MgCO₃), de la dolomie, des composés de terres rares tels que La₂O₃, des composés de métaux de transition tels que l'oxyde d'yttrium Y₂O₃, ou du titanate de baryum Ba TiO₃ qui est connu pour être un composé thermoémissif, ou d'autres composés thermoémissifs.

Les proportions respectives des différents composés sont, en pourcentage en poids rapporté du total des matières solides destinées à subsister dans la céramique finale :
- 30 à 90% pour les matériaux constituant la phase conductrice ;
- 8 à 60% pour les matériaux constituant la phase isolante ;
- 0 à 10% pour les additifs de frittage qui ne sont donc pas absolument obligatoires ; d'autre part, certains de ces additifs peuvent lors du frittage réagir avec les autres matériaux ou se décomposer : il doit être entendu que cette teneur de 0 à 10% concerne à la fois les additifs qui se retrouvent à l'identique dans la céramique finale et les produits de réaction à haute température de ces additifs.

De manière générale, après frittage on retrouve dans la céramique des composés du type AlₓSi_{y}O_{z} (avec y = 0 si on n'a pas utilisé de mullite), aluminate de lanthanide et silicate de lanthanide (si on a utilisé de la mullite) pour la phase isolante, Z₁₋ₓMₓCrO₃ pour la phase conductrice avec M = Ca, Sr, Mg, Al, Ti, Y ou un mélange de plusieurs de ces éléments, et une phase amorphe contenant principalement de l'oxygène et ceux des éléments Al, Si et Ca qui ont été introduits avec les produits de départ.

L'invention sera mieux comprise à la lecture de la description qui suit, donnée en référence aux figures annexées suivantes :
- la figure 1 qui schématise une bougie HEBT vue en coupe longitudinale ;
- la figure 2 qui montre l'usure moyenne de la céramique par rapport à l'électrode périphérique, exprimée en mm, en fonction du temps, exprimé en équivalents heures moteur, pour une bougie de référence et une bougie selon l'invention ;
- la figure 3 qui montre l'évolution du pourcentage de ratés d'étincelles en fonction du temps, exprimé en équivalents heures moteur, pour une bougie de référence et une bougie selon l'invention.

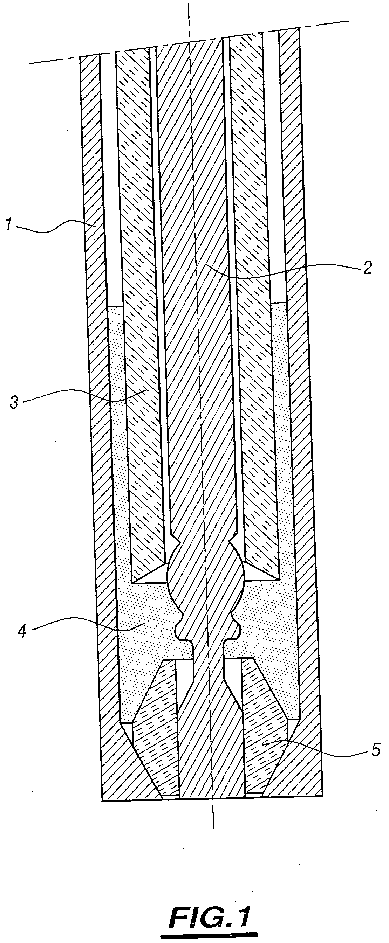

La figure 1 rappelle le schéma de principe de la conception d'une bougie HEBT. Celle-ci se compose d'un corps métallique tubulaire 1 constituant l'électrode périphérique et d'une électrode centrale 2. Un manchon en céramique 3 intercalé entre les deux électrodes 1, 2 assure l'isolation électrique de l'électrode centrale, sauf dans sa région d'extrémité où cette isolation est assurée par un verre de scellement ou un ciment 4 qui sert également au maintien mécanique et à l'étanchéité de l'ensemble. A l'extrémité de la bougie, se trouve une pièce annulaire 5 en céramique semi-conductrice qui relie les extrémités des deux électrodes 1, 2. L'invention porte sur la céramique semi-conductrice constituant cette pièce.

Comme exemples non limitatifs de procédés de préparation de céramiques selon l'invention, on peut citer les quatre modes opératoires suivants.

### Exemple 1

Au cours d'une première étape, on mélange des composés mis sous forme de poudres, de préférence en deux sous-étapes.

Dans la première sous-étape, on verse dans une jarre 40g de mullite (3Al₂O₃, 2SiO₂) et 10g de CaCO₃. La jarre contient 10 médias de broyage d'un diamètre de 13mm environ. On ajoute dans la jarre 14g d'eau osmosée, 0,18g de DOLAPIX A88 (2-amino-2-metylpropanol) et 0,02g de DOLAPIX Pc33 (polyacrylate). Ces deux composés sont des dispersants. On pourrait utiliser d'autres milieux liquides que l'eau, par exemple de l'alcool, mais dans ce dernier cas il faudrait utiliser d'autres dispersants, ceux cités précédemment n'étant pas compatibles avec l'alcool.

On effectue ensuite un broyage du mélange à relativement grande vitesse, en plaçant la jarre dans un planétaire pendant 45 minutes. Le but est de casser les éventuels agglomérats de poudre et de bien disperser la matrice. L'utilisation d'un broyeur à boulet serait possible, mais un mélange homogène serait plus long à obtenir (4 heures environ).

Dans une deuxième sous-étape, on ajoute dans la jarre 150g de chromite de lanthane LaCrO₃ de granulométrie moyenne 40µm et une solution contenant 36g d'eau osmosée, 5g de PEG 600. Le PEG 600 est un polyéthylène glycol. Ce composé est un plastifiant qui facilite l'étape de pressage ultérieure. La jarre est ensuite replacée dans le planétaire et on effectue un broyage à vitesse modérée pendant 20 minutes pour ne pas détériorer les plastifiants. Un broyage trop énergique briserait les chaînes polymères qui confèrent aux produits leurs propriétés élastiques. C'est également pour cette raison que les plastifiants ne sont introduits dans le mélange qu'après la première étape de broyage puisque celle-ci est énergique.

Le mélange obtenu est ensuite séché dans une étuve à 70°C pendant 20 heures pour éliminer l'eau du mélange.

La galette obtenue est broyée à l'aide d'un mortier. La poudre obtenue est tamisée avec un tamis de 500µm.

La poudre qui a traversé le tamis subit une opération de pressage en deux étapes : un pressage uniaxial dans un moule de 13mm de diamètre pour obtenir une préforme, puis un pressage isostatique dans une enceinte à 2000 bars.

Puis les préformes sont déliantées sous air, sous argon ou sous vide suivant les cas, à une température maximale de 700°C pendant 3 jours, afin de brûler les additifs organiques présents dans les préformes.

Enfin, les préformes sont placées dans un creuset en graphite ou en alumine rempli de poudre d'alumine de plus de 100µm pour y être frittées entre 1350 et 1950°C pendant une durée allant de 30 minutes à 1 heure sous air, sous azote ou argon.

Le cycle de déliantage utilisé est le suivant :
- montée à 0.2°C/mn jusqu'à 600°C
- palier de 5 heures à 600°C
- descente à 10°C/mn jusqu'à température ambiante.

Le cycle de frittage utilisé dans cet exemple est le suivant :
- montée à 10°C/mn jusqu'à 1550°C
- palier de 60mn à 1550°C
- descente à 60°C/mn jusqu'à 20°C

On obtient une céramique de composition :

**Tableau 1 : composition des céramiques obtenues selon l'exemple 1**

| | Maille | Quantité |
|---|---|---|
| Mullite triple cellule de synthèse AU_{4,75}Si_{1,25}O_{9,63} | Orthorhombique | 8 à 20% |
| Chromite de Lanthane La_{0,7}Ca_{0,3}CrO₃ dopé au calcium | Orthorhombique | 40 à 75% |
| Silicate de Lanthane La_{4,67} (SiO₄)₃O | Hexagonal | 2 à 5% |
| Oxyde de chrome CrO₂ | Tetragonal | 1 à 2% |
| Phase amorphe Si, Al, O, Ca. | | 2 à 8% |

Ces résultats sont obtenus par diffraction RX en ce qui concerne les phases cristallines, et par micrographie chimique au microscope électronique à balayage pour la phase amorphe.

La porosité totale mesurée (ouverte et fermée) est égale à 5%.

On obtient une céramique dont la tension de claquage relevée avec un générateur d'impulsions qui inclut un condensateur de 0,33µF est trouvée égale à 900V.

### Exemple 2

On utilise le même mode opératoire que l'exemple 1, à ceci près qu'on n'ajoute pas de CaCO₃. La quantité de mullite est alors portée à 44,24g, la proportion de LaCrO₃ est de 155,76g. Le déliantage a lieu à 600°C sous air, et le frittage a lieu à 1450°C pendant 30 minutes, sous air également.

On obtient une céramique de composition :

**Tableau 2 : Composition des céramiques obtenues selon l'exemple 2**

| | Maille | Quantité |
|---|---|---|
| Mullite de synthèse Al_{4,75}Si_{1,25}O_{9,63} | Orthorhombique | 8 à 20% |
| Chromite de Lanthane La_{0,7}Ca_{0,3}CrO₃ dopé au calcium | Orthorhombique | 40 à 75% |
| Silicate de Lanthane La_{4,67} (SiO₄)₃O | Hexagonal | 2 à 5% |
| Oxyde de chrome CrO₂ | Tetragonal | 1 à 2% |
| Phase amorphe Si, Al, O, Ca | | 2 à 8% |

La porosité totale mesurée est égale à 2% (cette valeur représente la porosité ouverte et fermée).

On obtient une céramique dont la tension de claquage relevée avec un opérateur d'impulsions qui inclut un condensateur de 0,33µF est trouvée égale à 1000V.

### Exemple 3

On utilise le même mode opératoire que pour l'exemple 1, en remplaçant la mullite par de l'alumine à grains fins. Le déliantage a lieu sous argon à 700°C, et le frittage à 1750°C.

La porosité de la céramique est comprise entre 5% et 10%.

On obtient une céramique dont la tension de claquage relevée avec un générateur d'impulsions qui inclut un condensateur de 0,33µF est trouvée de l'ordre de 1000V.

### Exemple 4

On utilise le même mode opératoire que pour l'exemple 1, en remplaçant la mullite par de l'alumine tabulaire. Le déliantage a lieu à 600°C sous air, et le frittage à 1600°C sous air également.

La porosité de la céramique est comprise entre 5% et 10%.

On obtient une céramique dont la tension de claquage relevée avec un générateur d'impulsions qui inclut un condensateur de 0,33µF est trouvée de l'ordre de 1000V.

Pour ces exemples, les proportions des différents composés de base sont résumées dans le tableau 3. Les pourcentages sont des pourcentages pondéraux. Les proportions d'eau et d'additifs sont données en référence au poids des autres composés du mélange (matière sèche), que l'on retrouvera dans la céramique finale soit inchangés, soit au moins partiellement transformés en phase isolante.

**Tableau 3 : Proportions des composés de base utilisés dans les exemples 1 à 4**

| | Exemple 1 | Exemple 2 | Exemple 3 | Exemple 4 |
|---|---|---|---|---|
| | (%) | (%) | (%) | (%) |
| Al₂O₃à grains fins | | | 40 | |
| Al₂O₃tabulaire | | | | 40 |
| CaCO₃ | 5 | | | |
| Mullite | 20 | 22.12 | | |
| | | | | |
| LaCro₃ | 75 | 77.88 | 60 | 60 |
| A88 | 0,09 | 0,09 | 0,09 | 0,09 |
| Pc33 | 0,01 | 0,01 | 0,01 | 0,01 |
| H₂O | 25 | 25 | 25 | 25 |

Il doit être entendu que les détails des modes opératoires pour l'obtention des céramiques selon l'invention peuvent s'écarter des exemples qui ont été décrits. L'essentiel est qu'au final, on obtienne une céramique ayant la composition et les porosités requises. En particulier, il est envisageable de se passer du pressage uniaxial et de n'effectuer qu'un pressage isostatique de la poudre.

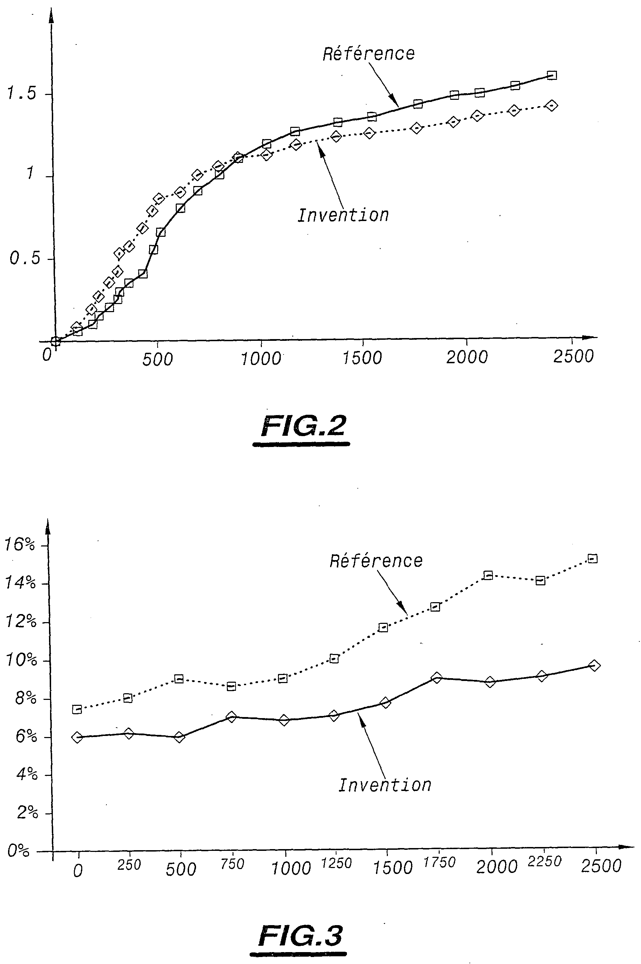

Les figures 2 et 3 présentent les résultats obtenus lors d'essais d'endurance sous pulvérisation de kérosène.

On utilise deux bougies d'allumage, la première montée avec une céramique semi-conductrice de référence représentative de l'art antérieur selon le document US-A-5 028 346 et renfermant du carbure de silicium, du nitrure de silicium et un oxynitrure de silicium modifié contenant 54 à 65% de SiC, 29 à 40% de nitrure de silicium et 8 à 22% d'oxynitrure de silicium modifié, et la seconde avec une céramique semi-conductrice conforme à l'exemple 1 de l'invention décrit précédemment, et par ailleurs identiques.

Le circuit d'allumage inclut un condensateur de 0,33 µF, la fréquence des pulvérisations de kérosène est de 1 Hz et la fréquence des impulsions est de 6Hz. La tension de claquage des deux bougies est trouvée égale à 900V.

La figure 2 montre la profondeur d'usure moyenne de la céramique par rapport à l'électrode périphérique, (exprimée en mm), en fonction du temps, exprimé en équivalent heures moteur.

L'usure mesurée de la céramique semi-conductrice de l'art antérieur est supérieure à celle mesurée sur la céramique semi-conductrice suivant l'invention. De plus la tension de claquage mesurée en fin de test (environ 2500 h équivalent moteur) augmente jusqu'à 1400V pour la céramique semi-conductrice de l'art antérieur alors qu'elle reste de 1000V pour la céramique semi-conductrice suivant l'invention.

La figure 3 montre l'évolution du pourcentage de ratés d'étincelles en fonction du temps exprimé en équivalent heures moteur.

L'amélioration du taux d'allumages réussis avec la céramique conforme à l'invention permet d'augmenter le potentiel opérationnel de la bougie

Le tableau 4 présente l'évolution de la tension de claquage V_{c} de la céramique semi-conductrice fabriquée suivant l'art antérieur précédemment décrite, et d'une autre céramique semi-conductrice fabriquée suivant l'exemple 1 de l'invention, lors d'un essai de vieillissement en température.

**Tableau 4 : Evolution de la tension de claquage lors d'un essai de vieillissement en température.**

| | Vc en condition ambiante | Vc après exposition 100h à 1000°C |
|---|---|---|
| Céramique de l'art antérieur | 900 V | 2500V |
| Céramique suivant l'invention | 900V | 900V |

Après exposition à 1000°C pendant 100 heures, on constate que la tension de claquage de la céramique suivant l'art antérieur dérive très fortement alors que la tension de claquage de la céramique conforme à l'invention reste stable. Cette performance permet d'utiliser cette céramique dans des turbines à très haute température de fonctionnement.

En combinant ces performances, faible pourcentage de ratés et stabilité en haute température, la céramique conforme à l'invention peut être utilisée dans des moteurs à allumage entretenu.

## Revendications

1. Procédé de préparation d'une céramique semi-conductrice, **caractérisé en ce que** :
- on mélange, dans un récipient renfermant un liquide, 30 à 90% en poids d'une phase conductrice à base de Z₁₋ₓMₓCrO₃ pour 0≤ X ≤0,3, avec Z pouvant être un élément du groupe des lanthanides ou un mélange de tels éléments, et M pouvant être du calcium, du strontium, du magnésium, de l'aluminium, du titane, de l'yttrium ou un mélange de deux ou plus de ces éléments ; 8 à 60% en poids d'une phase isolante à base d'alumine à grains fins ou d'alumine tabulaire ou de mullite ou d'un mélange de deux ou plus de ces composés ; et 0 à 10% en poids d'additifs de frittage ;
- on effectue des opérations de broyage, de séchage et de tamisage de ce mélange ;
- on effectue un pressage de ce mélange ;
- et on effectue un frittage de ce mélange de manière à obtenir une céramique de porosité inférieure ou égale à 25%.

2. Procédé selon la revendication 1, **caractérisé en ce que** Z est du lanthane.

3. Procédé selon la revendication 1 ou 2, **caractérisé en ce que** la porosité de la céramique obtenue est comprise entre 0 et 15%.

4. Procédé selon l'une des revendications 1 à 3, **caractérisé en ce qu'**on ajoute au mélange un ou plusieurs composés plastifiants et **en ce qu'**on effectue après le pressage et avant le frittage une opération de déliantage.

5. Procédé selon la revendication 4, **caractérisé en ce qu'**on effectue le broyage en deux étapes, **en ce que** l'addition du plastifiant a lieu entre les deux étapes, et **en ce que** la deuxième étape de broyage est moins énergique que la première étape.

6. Procédé selon l'une des revendications 1 à 5, **caractérisé en ce que** les additifs de frittage sont choisis parmi des silicates, des oxydes d'alcalins et d'alcalino-terreux Na₂O, K₂O, BaO, CaO, MgO, des carbonates d'alcalino-terreux BaCO₃, CaCO₃, MgCO₃, la dolomie, des composés de terres rares tels que La₂O₃, des composés de métaux de transition tels que Y₂O₃, des composés thermo-émissifs tels que BaTiO₃, ou un mélange de ces composés.

7. Céramique semi-conductrice, **caractérisée en ce qu'**elle comporte 30 à 90% en poids d'une phase conductrice à base d'un composé de type Z₁₋ₓMₓCrO₃ pour 0≤ X ≤0,3, Z pouvant être un élément du groupe des lanthanides ou un mélange de tels éléments, et avec M pouvant être du calcium, du strontium, du magnésium, de l'aluminium, du titane, de l'yttrium ou un mélange de deux ou plus de ces éléments, 8 à 60% en poids d'une phase isolante à base d'alumine ou de mullite ou d'un mélange de ces composés, ou de leurs produits de réaction à haute température, et 0 à 10% en poids d'additifs de frittage ou de leurs produits de réaction à haute température, et **en ce que** sa porosité est inférieure ou égale à 25%.

8. Céramique selon la revendication 7, **caractérisée en ce que** Z est du lanthane.

9. Céramique semi-conductrice selon la revendication 8, **caractérisée en ce que** sa porosité est comprise entre 0 et 15%.

10. Céramique semi-conductrice selon l'une des revendications 7 à 9, **caractérisée en ce que** les additifs de frittage sont choisis parmi des silicates, des oxydes d'alcalino-terreux BaO, CaO, MgO, Na₂O, K₂O des carbonates d'alcalino-terreux BaCO₃, CaCO₃, MgCO₃, la dolomie, des composés de terres rares tels que La₂O₃, des composés de métaux de transition tels que Y₂O₃, des composés thermo-émissifs tels que BaTiO₃, ou un mélange de ces composés.

11. Céramique semi-conductrice selon l'une des revendications 7 à 10, **caractérisée en ce qu'**elle renferme après frittage des composés du type AlₓSi_{y}O_{z}, avec y pouvant être égal à 0, aluminate de lanthanide et éventuellement silicate de lanthanide, Z₁₋ₓMₓCrO₃ avec M pouvant être Ca, Sr, Mg, Al, Ti, Y ou un mélange de plusieurs de ces éléments, et une phase amorphe à base d'oxygène et d'un ou plusieurs éléments parmi Al, Si, Ca.

12. Bougie d'allumage du type à haute énergie basse tension comportant une céramique semi-conductrice entre ses électrodes, **caractérisée en ce que** ladite céramique est du type selon l'une des revendications 7 à 11.

## Patentansprüche

1. Verfahren zur Herstellung einer Halbleiterkeramik, **dadurch gekennzeichnet, dass**:
- in einem Behälter, welcher eine Flüssigkeit enthält, 30 bis 90% Gewichts-% einer leitfähigen Phase auf Basis von Z₁₋ₓMₓCrO₃ für 0 ≤ X ≤ 0,3, wobei Z ein Element aus der Gruppe der Lanthaniden oder ein Gemisch aus solchen Elementen sein kann und M Calcium, Strontium, Magnesium, Aluminium, Titan, Yttrium oder ein Gemisch aus zwei oder mehr von diesen Elementen sein kann, 8 bis 60 Gewichts-% einer isolierenden Phase aus feinkörnigem Aluminiumoxid oder tafelförmigem Aluminiumoxid oder Mullit oder ein Gemisch aus zwei oder mehr von diesen Verbindungen, und 0 bis 10 Gewichts-% Sinteradditiven gemischt werden,
- Mahl-, Trocknen- und Siebeverfahren dieses Gemisches durchgeführt werden,
- ein Pressen dieses Gemisches durchgeführt wird,
- und ein Sintern dieses Gemisches durchgeführt wird, um eine Keramik mit einer Porosität von weniger oder gleich 25% zu erhalten.

2. Verfahren nach Anspruch 1, **dadurch gekennzeichnet, dass** Z Lanthan ist.

3. Verfahren nach Anspruch 1 oder 2, **dadurch gekennzeichnet, dass** die Porosität der erhaltenen Keramik zwischen 0 und 15% liegt.

4. Verfahren nach einem der Ansprüche 1 bis 3, **dadurch gekennzeichnet, dass** zu dem Gemisch eine oder mehrere weichmachende Verbindungen zugegeben werden, und dadurch, dass nach dem Pressen und vor dem Sintern ein Entbinderverfahren durchgeführt wird.

5. Verfahren nach Anspruch 4, **dadurch gekennzeichnet, dass** das Mahlen in zwei Schritten durchgeführt wird, dass die Zugabe des Weichmachers zwischen den zwei Schritten erfolgt und dass der zweite Schritt des Mahlens weniger energetisch als der erste Schritt ist.

6. Verfahren nach einem der Ansprüche 1 bis 5, **dadurch gekennzeichnet, dass** die Sinteradditive aus Silikaten, Alkali- und Erdalkalioxiden Na₂O, K₂O, BaO, CaO, MgO, Erdalkali-Carbonaten BaCO₃, CaCO₃, MgCO₃, Dolomit, Seltenerd-Verbindungen wie La₂O₃, Übergangsmetallverbindungen wie Y₂O₃, thermo-emittierenden Verbindungen wie BaTiO₃ oder einem Gemisch dieser Verbindungen ausgewählt ist.

7. Halbleiterkeramik, **dadurch gekennzeichnet, dass** sie 30 bis 90 Gewichts-% einer leitfähigen Phase auf Basis einer Verbindung des Typs Z₁₋ₓMₓCrO₃ für 0 ≤ X ≤ 0,3, wobei Z ein Element aus der Gruppe der Lanthaniden oder ein Gemisch aus solchen Elementen sein kann, und M Calcium, Strontium, Magnesium, Aluminium, Titan, Yttrium oder ein Gemisch aus zwei oder mehr von diesen Elementen sein kann, 8 bis 60 Gewichts-% einer isolierenden Phase aus feinkörnigem Aluminiumoxid oder tafelförmigem Aluminiumoxid oder Mullit oder ein Gemisch aus zwei oder mehr von diesen Verbindungen, oder deren Reaktionsprodukte bei hoher Temperatur, und 0 bis 10 Gewichts-% Sinteradditiven aufweist, und dass ihre Porosität weniger als oder gleich 25% ist.

8. Keramik nach Anspruch 7, **dadurch gekennzeichnet, dass** Z Lanthan ist.

9. Halbleitende Keramik nach Anspruch 8, **dadurch gekennzeichnet, dass** die Porosität der erhaltenen Keramik zwischen 0 und 15% liegt.

10. Halbleitende Keramik nach einem der Ansprüche 7 bis 9, **dadurch gekennzeichnet, dass** die Sinteradditive aus Silikaten, Alkali- und Erdalkalioxiden Na₂O, K₂O, BaO, CaO, MgO, Erdalkali-Carbonaten BaCO₃, CaCO₃, MgCO₃, Dolomit, Seltenerd-Verbindungen wie La₂O₃, Übergangsmetallverbindungen wie Y₂O₃, thermo-emittierenden Verbindungen wie BaTiO₃, oder einem Gemisch dieser Verbindungen ausgewählt sind.

11. Halbleitende Keramik nach einem der Ansprüche 7 bis 10, **dadurch gekennzeichnet, dass** sie nach dem Sintern Verbindungen des Typs AlxSiyOz, wobei y gleich 0, Lanthanid-Aluminat und gegebenenfalls Lanthanid-Silikat sein kann, Z₁₋ₓMₓCrO₃, wobei M Ca, Sr, Mg, Al, Ti, Y oder ein Gemisch aus mehreren dieser Verbindungen sein kann, und eine amorphe Phase auf Basis von Sauerstoff und einer oder mehreren Verbindungen aus Al, Si, Ca enthält.

12. Zündkerze des Typs Hochenergie-Niederspannung, aufweisend eine halbleitende Keramik zwischen ihren Elektroden, **dadurch gekennzeichnet, dass** die Keramik des Typs nach einem der Ansprüche 7 bis 11 ist.

## Claims

1. Method for preparing a semi-conductive ceramic material, **characterised in that**:
- in a receptacle containing a liquid, there are mixed from 30 to 90% by weight of a conductive phase based on Z₁₋ₓMₓCrO₃ for 0≤X≤0.3, with Z being able to be an element of the lanthanide group or a mixture of elements of this type, and M being able to be calcium, strontium, magnesium, aluminium, titanium, yttrium or a mixture of two or more of these elements; from 8 to 60% by weight of an insulating phase based on fine grains of alumina or tabular alumina or mullite or a mixture of two or more of these compounds; and from 0 to 10% by weight of sintering additives;
- operations are carried out for milling, drying and sieving this mixture;
- this mixture is pressed;
- and this mixture is sintered in order to obtain a ceramic material having a porosity less than or equal to 25%.

2. Method according to claim 1, **characterised in that** Z is lanthanum.

3. Method according to claim 1 or 2, **characterised in that** the porosity of the ceramic material obtained is between 0 and 15%.

4. Method according to any one of claims 1 to 3, **characterised in that** one or more plasticising compounds are added to the mixture and **in that** a de-binding operation is carried out after the pressing and before the sintering.

5. Method according to claim 4, **characterised in that** the milling is carried out in two steps, **in that** the addition of the plasticising agent is effected between the two steps, and **in that** the second milling step is less energetic than the first step.

6. Method according to any one of claims 1 to 5, **characterised in that** the sintering additives are selected from silicates, alkaline and alkaline-earth oxides Na₂O, K₂O, BaO, CaO, MgO, alkaline-earth carbonates BaCO₃, CaCO₃, MgCO₃, dolomite, rare earth compounds, such as La₂O₃, transition metal compounds, such as Y₂O₃, thermoemissive compounds, such as BaTiO₃, or a mixture of these compounds.

7. Semi-conductive ceramic material, **characterised in that** it comprises from 30 to 90% by weight of a conductive phase based on a compound of the type Z₁₋ₓMₓCrO₃ for 0≤X≤0.3, Z being able to be an element of the lanthanide group or a mixture of elements of this type, and M being able to be calcium, strontium, magnesium, aluminium, titanium, yttrium or a mixture of two or more of these elements, from 8 to 60% by weight of an insulating phase based on alumina or mullite or a mixture of these compounds or the high temperature reaction products thereof, and from 0 to 10% by weight of sintering additives or the high temperature reaction products thereof, and **in that** the porosity thereof is less than or equal to 25%.

8. Ceramic material according to claim 7, **characterised in that** Z is lanthanum.

9. Semi-conductive ceramic material according to claim 8, **characterised in that** the porosity thereof is between 0 and 15%.

10. Semi-conductive ceramic material according to any one of claims 7 to 9, **characterised in that** the sintering additives are selected from silicates, alkaline-earth oxides BaO, CaO, MgO, Na₂O, K₂O, alkaline-earth carbonates BaCO₃, CaCO₃, MgCO₃, dolomite, rare earth compounds, such as La₂O₃, transition metal compounds, such as Y₂O₃, thermoemissive compounds, such as BaTiO₃, or a mixture of these compounds.

11. Semi-conductive ceramic material according to any one of claims 7 to 10, **characterised in that**, after sintering, it contains compounds of the type AlₓSi_{y}O_{z}, with y being able to be equal to 0, lanthanide aluminate and optionally lanthanide silicate, Z₁₋ₓMₓCrO₃, with M being able to be Ca, Sr, Mg, Al, Ti, Y or a mixture of several of these elements, and an amorphous phase based on oxygen and one or more elements from Al, Si, Ca.

12. Ignition plug of the high-energy, low-voltage type comprising a semi-conductive ceramic material between the electrodes thereof, **characterised in that** the ceramic material is of the type according to any one of claims 7 to 11.
